# EUROPEAN PATENT APPLICATION

(11) **EP 4 199 311 A1**
(43) Date of publication of application: **21.06.2023**
(21) Application number: 21215589.9
(22) Date of filing: 17.12.2021
(51) Int. Cl.: H02K 1/20, H02K 9/197

(54) **STATOR COOLING FOR ELECTRIC MACHINES**

(71) Applicant: Volvo Car Corporation, 40531 Göteborg (SE)
(72) Inventor: Andersson, Johan, 417 27 Göteborg (SE); Håkansson, Emil, 416 74 Göteborg (SE); Brunberg, Johan, 431 43 Mölndal (SE)
(74) Representative: Nederlandsch Octrooibureau

(57) **Abstract**

The present disclosure relates to electric machine comprising a housing, a movable element within the housing; a stator surrounding the movable element within the housing, the stator comprising a plurality of windings with end windings at a first end and a second end, a stator cooling system comprising: an inlet through the housing; cooling ducts connected to the inlet and extending though the plurality of windings; and a wind cap at each of the first end and the second end of the end windings, encapsulating each of end windings such that a coolant flows from the inlet to the wind cap through the cooling ducts, wherein each wind cap comprises at least one outlet. The present disclosure further relates to a method of cooling an electric machine.

## Description

### TECHNICAL FIELD

The present disclosure relates to an electric machine and to a method of cooling an electric machine.

### BACKGROUND ART

Many vehicles rely on electric machines as a source of mechanical energy. Electric machines typically include a rotor and a stator. The stator includes a plurality of electrical windings which can be supplied with electric current to generate a magnetic field. Due to the magnetic field, the rotor rotates within the stator to generate an electrical field that produces an electrical current. During operation, producing the electrical field results in the generation of heat in the stator. This heat reduces operational efficiency of the electric machine.

Various systems have been employed to reduce heat generated by operation of the electric machine. Oil cooled machines have become more and more available on the market. Oil cooled machines are very efficient to cool the rotor, but the stator is more complicated.

In electric machines, such as electrical motors in electric or hybrid vehicles, thermal capacity of rotor magnets and stator winding affects available output power of the electric machines. The rotor magnets typically have a thermal limit of 150 °C and when temperature increases further, demagnetization occurs which reduces performance of the machine. The stator winding, which includes multiple copper wires, is insulated with a material which has a temperature limit of approximately 180°C and if the temperature increases further, thermal fatigue cracks can occur. This can cause shortcuts and terminate the electric machine.

The rotor and the stator windings need to be cooled in order to improve performance of the electric machine. This cooling is commonly performed using a liquid medium such as oil or water.

### SUMMARY

In an example of the present disclosure, an electric machine is provided, comprising a housing, a movable element within the housing; a stator surrounding the movable element within the housing, the stator comprising a plurality of windings with end windings at a first end and a second end, a stator cooling system comprising an inlet through the housing, cooling ducts connected to the inlet and extending though the plurality of windings, and a wind cap at each of the first end and the second end of the end windings. The wind caps encapsulate each of end windings such that a coolant flows from the inlet to the wind cap through the cooling ducts. Each wind cap comprises at least one outlet. The present configuration provides a more efficient electric machine due to the placement of the wind cap. This arrangement allows cooling the end winding with coolant immersion, and dissipating the heat generated in the end winding quickly, thereby minimizing the effects of temperature in the torque/rotational speed of the electric machine, boosting the electric machine performance, and increasing energy efficiency of the electric machine while reducing cost.

In an example of the present disclosure, the plurality of windings are copper windings. Copper windings provide a high electrical conductivity, thereby allowing current to flow easily through the windings, leading to a more efficient electric machine.

In an example of the present disclosure, the cooling ducts are formed within the stator, or the cooling ducts comprise grooves on an outer surface of the stator and an inner surface of the motor housing, or the cooling ducts comprise grooves on an inner surface of the motor housing and an outer surface of the stator. Cooling ducts allows the distribution of coolant around the stator, reducing its temperature.

In an example of the present disclosure, the cooling ducts are evenly distributed. This has the benefit that an especially uniform distribution of the coolant among the cooling ducts of the stator is achieved, and hence the occurrence of thermal stress in the stator is minimized.

In an example of the present disclosure, the cooling ducts include radial and axial cooling ducts.

In an example of the present disclosure, the inlet is at equal distance to the end windings at the first end and the second end. Such an arrangement allows that the same amount of coolant flows through both end windings at the same time, lowering end windings temperature at the same time.

In an example of the present disclosure, the wind cap includes an annular shell part having a first circumferential surface, a second circumferential surface and a side surface, wherein the annular shell defines an internal cavity for encapsulating each of the end windings; and a wind portion extending perpendicular to the second circumferential portion. Such form or shape of the wind cap minimizes the volume within the cavity of the wind cap through which the coolant can flow, thereby reducing the total amount of coolant required for cooling the electric machine.

In an example of the present disclosure, the plurality of outlets are placed on the annular shell and/or the wind portion of the wind cap. Such arrangement of the outlets optimizes the flow field or distribution of coolant inside the wind cap.

In an example of the present disclosure, the wind cap is made of a plastic material or of a metal material and a coating. Plastic materials can have good electrical and thermal insulation, allowing isolation electrically and thermally of any component below the frame from the terminals and gas vented. Furthermore, plastic material are relatively inexpensive and typically easy to manufacture, thus providing cost savings. In case the wind cap is made of metal material, a coating is needed to provide electrical and thermal isolation between the wind cap and the stator.

In an example of the present disclosure, a seal is placed between the stator and the wind cap. Optionally, the seal is made of a flexible sealing material, as for example, rubber and epoxy. The seal prevents the coolant from falling onto the rotor (or movable elements), which prevents machine level windage and friction loss.

In a further aspect of the present disclosure, a method of cooling an electric machine is provided, wherein the electric machine includes a stator, the stator comprising a plurality of windings with end windings (30) at a first end and a second end, wherein cooling ducts are connected to an inlet and extend though the plurality of windings, and wherein a wind cap encapsulates each of end windings. The method comprises flowing the coolant through the inlet into the cooling ducts towards the first end and the second end of the stator such that the coolant flows around the end windings; collecting the coolant around the end windings via the wind cap; and discharging the coolant through at least one outlet placed on the wind cap.

In an example of the present disclosure, the method step of collecting the coolant around the end windings via the wind cap further comprises flowing the coolant to an internal cavity of the wind cap through a channel formed between the stator and the wind cap.

In an example of the present disclosure, the method comprises reducing a pressure of the coolant within the wind cap .

In a further aspect of the present disclosure, a vehicle comprises the electric machine.

The electric machine may include a number of additional features and structures. These features and structures may be included in various combinations that include some of these features and structures, all of these features and structures, or one of these features and structures.

### BRIEF DESCRIPTION OF DRAWINGS

The present disclosure will be described in more detail below, with reference to preferred embodiments as shown in the drawings attached, in which:
FIG. 1 shows a schematic view of an electric machine.
FIG. 2A shows a schematic view of a stator.
FIG. 2B shows a schematic view of a stator with windings.
FIG. 3 shows a perspective view of a part of an electric machine.
FIG. 4 shows an schematic view for cooling an electric machine.

### DESCRIPTION OF EMBODIMENTS

The aspects of the present disclosure will now be described more fully hereinafter with reference to the accompanying drawings, in which certain embodiments of the disclosure are shown.

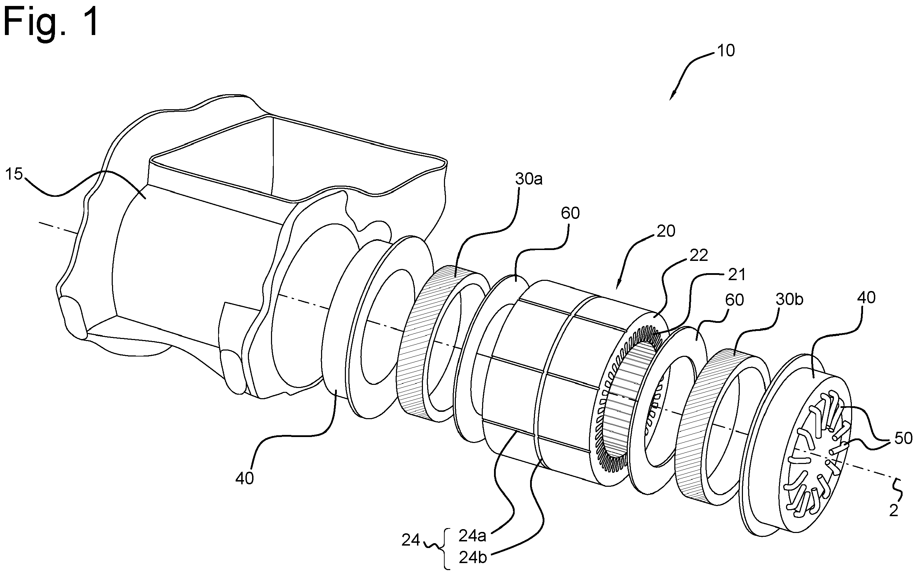

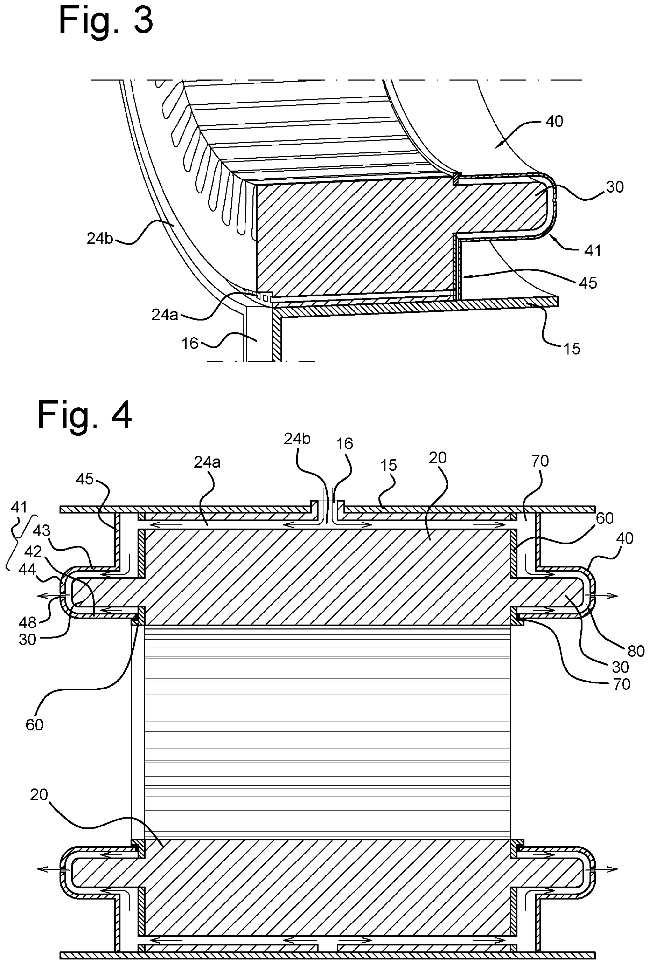

FIG. 1 shows a schematic view of an electric machine 10. The electrical machine 10 comprises a stator 20, a stator winding and a movable element (not shown). The movable element can be, for example, a rotor. The stator 20, which is roughly shaped as a hollow cylinder, is arranged in a circular manner around the movable element. The stator 20 is normally fixed by mounting to a rigid structure 30, for example a motor housing, but it is also possible to mount it in a movable manner. The rotor is movable in relation to the stator about a longitudinal axis 2, as shown in FIG. 3. The electric machine 10 can be, without limitation, an electric motor, such as a hybrid electric motor, an electric generator, or a vehicle alternator.

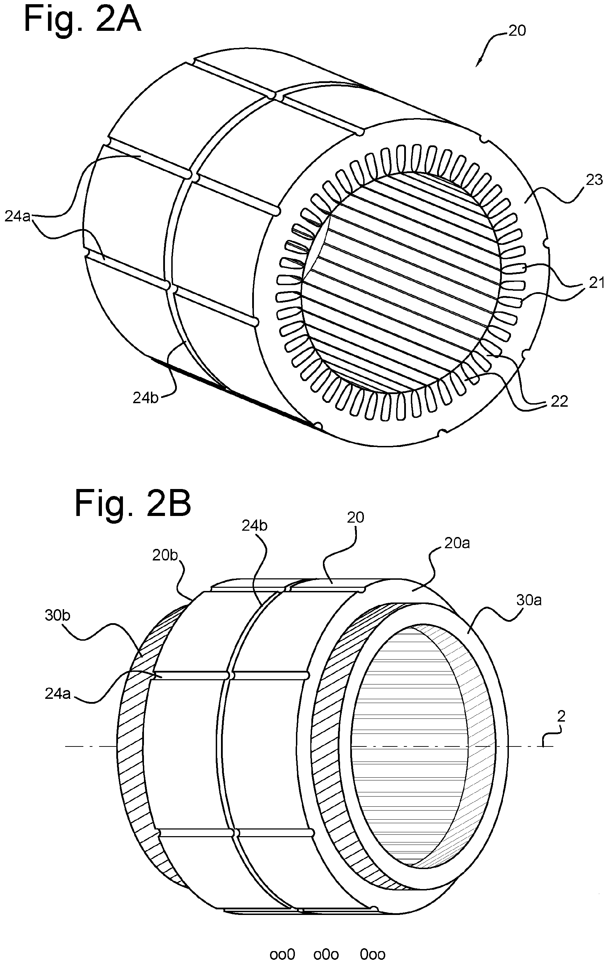

As shown in FIG. 2A and FIG. 2B, the stator typically includes a stator core 23 (or stator body) and a plurality of radially-inwardly teeth 21 separated by slots 22. The radially-inwardly teeth 21 refer to teeth such that a longitudinal dimension of each tooth 21 runs parallel to the longitudinal axis 2 and extends inwardly toward the longitudinal axis 2. Each slot 22 has an open end formed by tooth tips of adjacent stator teeth. The slot open end is conventionally relatively narrow, compared with the width of the slot itself, so as to provide wire retention.

As shown in FIG. 2B, the stator windings are placed into slots 22. Stator windings are in the form of hairpin conductor segments. A number of hairpin conductor segments are inserted axially into the slots 22. After insertion, two segments ends of the hairpin conductor segments extending out from the slots are welded to segment ends of adjacent conductor segments in order to form a continuous stator winding. Alternatively, a continuous magnetic wire is wound into a wave or looped pattern and then pulled into the slots 22 in an axial direction. By using end windings in the form of hairpins, the filling of slots 22 is maximized, with consequent higher power with a more compact electric machine. Stator windings are made of an electrical conductive material, as copper. Alternatively, the stator windings can be made of any other suitable electrical conductive material, for example, gold, silver, aluminum, iron, steel and the like. The stator windings (or hairpin conductor segments) that project out of the stator 20 in the longitudinal axis 2 are called end windings. As shown in FIG. 1 and 2A-2B, two end windings 30 project out of the stator 20. For example, a first end winding 30a on a first end 20a of the stator and a second end winding 30b on a second end 20b of the stator.

The stator 20 comprises a plurality of cooling ducts 24a, 24b and at least one of the plurality of cooling ducts 24a, 24b is aligned with an oil inlet (not shown) through which coolant enters and then is distributed along the plurality of cooling ducts 24a, 24b. The plurality of cooling ducts 24a, 24b are formed as grooves on an outer surface of the stator (as shown in FIG. 1-2), or formed as grooves on an outer surface of the stator and within the stator (as shown in FIG. 3-6). FIG. 3-6 show that the longitudinal cooling ducts 24a are formed at a few millimeters radially towards the stator core 23 from the outer surface of the stator. Alternatively, the cooling ducts can be formed as groves on a surface of the motor housing in contact with the stator. By placing the cooling ducts in or within the stator, the cooling ducts get closer to a heat source (e.g. windings) when the electric machine is in use, thereby providing a more efficient cooling effect.

The plurality of cooling ducts comprises a circumferential cooling duct 24b and a plurality of longitudinal cooling ducts 24a. Alternatively, the plurality of cooling ducts can comprise a plurality of circumferential cooling ducts, between 2 and 60 circumferential cooling ducts, for example 5 circumferential cooling ducts. The circumferential cooling duct 24b is formed as a circumferential groove around the stator 20. When the stator 20 is enclosed by the motor housing 15, the circumferential groove forms a cavity in which coolant can be guided. The circumferential cooling duct 24b is placed closer to one of the end-windings than to the other end-winding. Alternatively, the circumferential cooling duct 24b can be placed at an equal distance from both end-windings. The plurality of longitudinal cooling ducts 24a are evenly distributed along the stator 20, a few millimeters radially towards the stator core 23. The plurality of longitudinal cooling ducts 24a comprises between 20 and 200 longitudinal cooling ducts 24a, for example 60 longitudinal cooling ducts 24a. An inlet 16 (as shown in FIG. 3) of the motor housing 15 is aligned with at least a portion of the circumferential cooling duct 24b, such that coolant can enter into the circumferential cooling duct 24b, and then flow to each longitudinal cooling duct 24a present in the stator. The inlet 16 is located at equal distance to the end windings at the first end and the second end. In the present context, although reference may be made to a coolant, this is equally intended to cover and include cooling medium, cooling oil, water and the like.

While operating the electric machine 10, heat is generated due to the electromagnetic losses, mechanical power losses, and other stray losses that take place in various components within the electric machine 10. Through conduction, convection, and/or radiation, the thermal energy is transferred to a coolant (or cooling medium) on the basis of a temperature difference between the hot and cold bodies. That is, thermal energy is transferred from windings in slots 22 to the stator 20, and from the stator 20 to the coolant flowing through the cooling ducts 24a, 24b, such that the windings in slots 22 can be cooled. However, this does not provide any cooling for the end-windings 30.

FIG. 3 shows a perspective view of a part of the electric machine 10 and FIG. 4 shows a cross sectional view of the electric machine 10. The electric machine 10 comprises a wind cap 40 encapsulating each of end windings 30. Each wind cap 40 comprises an annular shell part 41 and a wind part 45. The annular shell part 41 has a first circumferential surface 42, a second circumferential surface 43 and a side surface 44 connecting the first circumferential surface 42 and the second circumferential surface 43. The annular shell part 41 defines an internal cavity 80 for encapsulating the end winding 30. Alternatively, the annular shell part can have any other shaped which encapsulate the end windings and minimize the amount of coolant.

The wind cap is attached to the stator by attachment means. Examples of attachment means include screw, adhesive or other means known by a person skilled in the art. For example, the wind cap can be attached to the electric machine 10 by an stopper (or protrusion) placed on the internal surface of the housing 15 extending toward the longitudinal axis 2 and by a bracket (or protrusion) of a plate 60.

On one side the wind caps outer perimeter is forced against a stop in the outer housing, where the outer housing has a smaller diameter than that of the wind cap. On the other side of the machine it will be pushed against the stator when the outer lid/bracket is mounted onto the housing. Thus it will be kept in place axially by the outer housing on one side, and a lid/bracket/endplate on the other side.

The wind cap 40 is made of a plastic, resin or other material. Examples of suitable plastic materials are carbon fibre, polypropylene and polyethylene, and the like, or any combination thereof. Alternatively, the wind cap 40 can be made of a metal material and a coating. When the wing cap is made of metal, coating is needed in order to provide thermal and electrical insulation. Examples of suitable coatings are plastic material, ceramic material and the like.

The wind cap 40 comprises a plurality of outlets 48. The outlets 48 are placed on the at least one outlet (48) is placed on annular shell part (41) and/or the side surface (44) of the wind cap (40). As shown in the example of FIG. 3 and 4, the outlets are evenly distributed on the side surface 44 of the wind cap 40. The plurality of outlets 48 comprises at least 4 outlets, preferably 20 or more. The outlets are placed closer to the first circumferential surface 42 than to the second circumferential surface 43. Alternatively, the outlets can be placed at an even distance from the first circumferential surface 42 and the second circumferential surface 43. Optionally, the outlets 48 can be connected to a pipeline (not shown). Optionally, outlets placed on a portion of the wind part 45 closer to the housing 15 can serve as gas venting, allowing gas mixed with the coolant to escape out of the wind cap before reaching the internal cavity 80, and thereby allowing a better cooling effect on the end winding.

The plate 60 is placed between the wind cap 40 and the stator 20. The plate comprises a plurality of openings aligned with the plurality of longitudinal cooling ducts 24a such that the coolant can flow out of the longitudinal cooling ducts 24b into the wind cap 40. The plate comprises a metallic material, for example steel, iron, aluminum, and the like. The plate 60 is firmly attached to the stator by an adhesive, as glue, or fastening means, such as bolts, screw or other suitable fastening means. Such plate 60 allows to keep coolant between the wind cap and the stator, thereby avoiding that the coolant flows through the slots 22 and the stator windings placed into the slots 22. The plate 60 is a circumferential L-shape plate (or bracket), in which a short side of the L-shape extends over the second circumferential surface 43 of the wind cap 40 and a long side of the L-shape extends over an end side of the stator. The long side of the L-shape of the seal comprises the openings aligned with the plurality of longitudinal cooling ducts 24b. Such plate arrangement provides support for the wind cap.

A seal 70 is placed between the wind cap 40 and the plate 60. The seal 70 is a gasket seal. Alternatively, the seal can be a labyrinth seal, a shaft seal and/or an adhesive seal. The seal 70 can comprise a hydrocarbon sealant material, a rubber material, a silicone material (e.g. a room temperature vulcanizing (RTV) silicone material), and the like, or any combination thereof. The seal allows the coolant from falling onto the rotor (or movable elements). In order to provide a secure, leak-proof seal those skilled in the art will readily appreciate that one or more seals may also be provided between the wind cap, the plate, and/or any other structure or component as desired.

FIG. 4 shows an schematic view for cooling an electric machine 10. The inlet 16 which is in fluid communication with at least a part of the circumferential cooling duct 24b serves to provide coolant into the circumferential cooling duct 24b of the stator 20. Then, the coolant flows in generally opposing directions though the longitudinal cooling ducts 24a. These cooling ducts 24a, 24b increase the surface of the stator for cooling the stator by heat transfer from the to the coolant. The coolant then picks up and carries heat away from the stator. Furthermore, by providing the coolant flowing in opposite directions through the longitudinal cooling ducts 24a from the circumferential cooling duct 24b, the heat transferred to the coolant in a side of the stator it is not transferred to the opposite part of the stator, hence both sides and each end winding can be cooled independently.

When the coolant flowing through the longitudinal cooling ducts 24a reaches an end of the stator (e.g. the first end 20a and/or the second end 20b), the coolant is directed to the internal cavity 80 of the wind cap 40 through a channel 70 formed between the stator 20 and the wind part 45 of the wind cap 40. The channel 70 guides the coolant to the end winding, such that when the coolant reaches the end winding, the coolant has a lower pressure that when flowing through the cooling ducts 24a,24b. This reduction of the pressure allows the coolant to completely immense the end winding, so heat can be effectively transferred to the coolant, thereby avoiding hot spots in the end windings which may cause shorts, phase-to-phase shorts, burned windings, voltage spikes, and the like. Moreover, this reduction of the pressure also makes easy to seal properly the wind cap to the stator, thereby avoiding the falling out of coolant to the movable element (or motor). Finally, the coolant flows out of the wind cap 40 via the outlet 48, such that heat transferred to the coolant is very effectively discharged from the end winding 30.

The present disclosure must not be regarded as being limited to the preferred embodiments described above; a number of further variants and modifications are feasible without departing from the scope of the patent claims. An electrical machine configured according to the present disclosure may be used wherever a small and efficient electric machine is desired, for example, to control valves on a combustion engine.

## Claims

1. An electric machine (10) comprising:
- a housing (15),
- a movable element within the housing;
- a stator (20) surrounding the movable element within the housing, the stator comprising a plurality of windings with end windings (30) at a first end and a second end,
- a stator cooling system comprising:
∘ an inlet (16) through the motor housing;
∘ cooling ducts (24a,24b) connected to the inlet and extending though the plurality of windings; and
∘ a wind cap (40) at each of the first end (20a) and the second end (20b) of the end windings, encapsulating each of end windings such that a coolant flows from the inlet to the wind cap through the cooling ducts, wherein each wind cap comprises at least one outlet (48).

2. The electric machine of any preceding claim, wherein the cooling ducts (24a,24b) are evenly distributed.

3. The electric machine of any preceding claim, wherein the cooling ducts (24a,24b) include a circumferential cooling duct (24b) and a plurality of longitudinal cooling ducts (24a).

4. The electric machine of any preceding claim, wherein at least one of the cooling ducts (24a,24b) is at least formed within the stator or as a groove on an outer surface of the stator.

5. The electric machine of any preceding claim, wherein the inlet (16) is located at equal distance to the end windings at the first end and the second end.

6. The electric machine of any preceding claim, wherein the wind cap (40) comprises an annular shell part (41) defining an internal cavity (80) for encapsulating the end winding and a wind part (45).

7. The electric machine of claim 6, wherein the annular shell part (41) comprises a first circumferential surface (42), a second circumferential surface (43) and a side surface (44) connecting the first circumferential surface and the second circumferential surface.

8. The electric machine of claim 6-7, wherein the at least one outlet (48) is placed on the annular shell part (41) and/or the wind part (45) of the wind cap (40).

9. The electric machine of any preceding claim, wherein the wind cap (40) is made of a plastic material or of a metal material and a coating.

10. The electric machine of any preceding claim, wherein a plate (60) placed between the wind cap (40) and the stator.

11. The electric machine of claim 10, wherein a seal (70) is placed between the plate (60) and the wind cap (40).

12. A vehicle comprising the electric machine of claim 1-11.

13. A method of cooling an electric machine (10), wherein the electric machine (10) includes a stator (20), the stator comprising a plurality of windings with end windings (30) at a first end and a second end, wherein cooling ducts (24a,24b) are connected to an inlet (16) and extend though the plurality of windings, and wherein a wind cap (40) encapsulates each of end windings (30), the method comprising:
- flowing the coolant through the inlet (16) into the cooling ducts (24a,24b) towards the first end and the second end of the stator such that the coolant flows around the end windings (30);
- collecting the coolant around the end windings (30) via the wind cap (40); and
- discharging the coolant through at least one outlet (48) placed on the wind cap (40);

14. The method of claim 13, wherein the step of collecting the coolant around the end windings via the wind cap comprising, flowing the coolant to an internal cavity (80) of the wind cap (40) through a channel (70) formed between the stator (20) and the wind cap (40).

15. The method of claim 13-14, further comprising reducing a pressure of the coolant within the wind cap (40) .
